# EUROPEAN PATENT APPLICATION

(11) **EP 1 014 671 A2**
(43) Date of publication of application: **28.06.2000**
(21) Application number: 99310530.3
(22) Date of filing: 23.12.1999
(51) Int. Cl.: H04M 15/00

(54) **Arrangement for billing or billing authorization using a telecommunication network**

(30) Priority: 23.12.1998 US 219813; 23.09.1999 US 368932
(71) Applicant: NORTEL NETWORKS CORPORATION, Montreal, Quebec H2Y 3Y4 (CA)
(72) Inventor: Bouffard, Claude C., Chelsea, Quebec J0X 1N0 (CA); Shannon, John P., Dunrobin, Ontario K0A 1T0 (CA)
(74) Representative: Bewley, Ewan Stuart

(57) **Abstract**

For authorizing a service such as a web based service provided by a third party service provider to a subscriber of a telecommunications network, the service provider or his calling agent makes a call to the subscriber, to obtain an authorization from the subscriber for an amount to be billed to the subscriber on their network bill. The web service is then provided and the billing system of the network is arranged to charge the subscriber an amount indicated by the service provider, and credit the service provider. Having the authorizing call made to the subscriber (rather than having the subscriber make the call) makes it easier for the provider to handle large scale operations. Also, it is easier for a subscriber. Notably, existing telephone billing systems are well adapted for billing many small transactions, and distributing the revenue.

## Description

### FIELD OF THE INVENTION

The invention relates to methods of using a telecommunications network for authorising a service provided by a third party service provider, to methods of operating a telecommunications network having an associated billing system to enable the billing system to be used for billing for such services, to methods of using a billing system for a telecommunication network, to methods of causing a subscriber to a telecommunication network to be billed by a billing system of the telecommunication network for such services, to methods of using an agent to bill for a service, to methods of causing a subscriber to a utility to be billed by a billing system of the utility for such services, to methods of requesting such services, to corresponding apparatus for carrying out such methods, and to software for carrying out such methods.

### BACKGROUND TO THE INVENTION

Use of data networks to access information and to advertise goods or services has gradually developed recently into E-Commerce, i.e. the sales of goods and services over data networks. Various payment systems are known for customers to pay the retailer (merchant) for the goods or services they have ordered.

Traditionally, merchants used voice data networks and allowed customers to pay for the services offered through "800" or "900" calling schemes. However, such schemes were of limited value for modem e-commerce since the cost of the transaction is determined by the duration that a communications path is maintained between consumer and merchant. Further, such schemes were not sufficiently flexible for telemarketing purposes since the communications path to a consumer could not be initiated at the behest of the merchant. Further, the cost rate of the transaction was controlled by operator of the network, thereby limiting the ability of merchants to respond quickly to market pressures. Although a merchant could retain multiple "900" lines, with each line having an associated cost rate, the cost of retaining a suitable number of such lines would be prohibitive. Consequently, the use of the Internet and credit card based payment systems having gained popularity.

In accordance with the conventional credit card payment scheme, either the user enters credit card details into a dialogue frame on his computer screen, or these details may be delivered by phone. In the former case there is exposure to fraud - either a security risk that the details can be intercepted, or that a user may misrepresent themselves using a false or stolen credit card number, or finally that the web merchant may intentionally or unintentionally be party to passing on the credit card details. The latter case, the phone solution, is more secure, but has some other problems. In many cases a home computer user will be occupying his only phone line for the Internet access. At the web merchant, there needs to be a reliable link between the web based order, and the phone based payment. This may be complex to administer in ways that are not open to fraud. It also adds a cost element to the service over and above the service cost and imbedded credit card fees - that of the telephony connection.

A more fundamental problem for some types of purchase is the price structure of credit card transactions which renders transactions involving small amounts of money uneconomical. When compounded by the risk potential for fraud, users and merchants alike are biased against subscribing to or using services which have a value below a threshold cost which may lie as high as ten dollars. There are potentially many web based services in particular may fall into this category. For example, data providers may want to be able to charge small amounts for rights to small volumes of data.

It is also known to have subscription systems which involve pre-payment of e.g. a monthly fee. The user is given a password, to enable access to the web merchant's web site. The users I.P.(Internet Protocol) address or other identifier may be used for further verification of a user. This arrangement is unsuitable for users who want to browse many different web sites, and acts as a deterrent to first time or impulse buying.

A third known arrangement involves the use of digital tokens. A user prepurchases a list of "magic numbers" or a mechanism to generate a limited number of such numbers or tokens. They can be stored at a server or at the users machine. The numbers can be used once to access a web site, then are disabled. Some advantages include the suitability for small value transactions, and the possibility of using the same type of tokens to pay for access to many different merchants' web sites. They may also be purchased in different currencies. Another advantage is anonymity compared to credit card payment. Disadvantages include the fact that there are many different types of tokens offered, and each has a limited radius of service, since each web merchant or ISP (Internet Service Provider) needs to maintain specific software to accept a particular type of token. So far no one system is widely accepted, and there are too many parties involved to make agreement on one system likely. In any case, there is a further disadvantage that some form of prepayment is still required.

A fourth category of known arrangement is shown in US patent no. 5,745,556 to Ronen. In this case, a web merchant makes a "900" telephone number available to a user. To gain access to the merchant's web page, or to conclude a sale, the user must make the "900" call to the merchant's number. This causes the telephone company (telco) to make a charge to the users telephone bill at a rate set by the merchant (the called party). A proportion of this money is passed to the merchant using the telco's existing billing systems.

A similar arrangement is shown in US patent no. 5,729,594 to Klingman. This shows using a "900" number to pay for on-line services without the need for further authentication of the buyer.

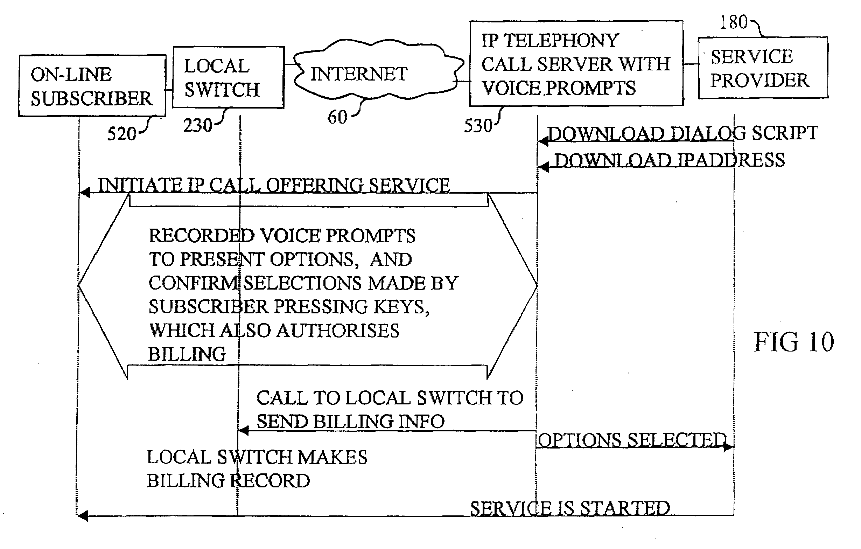

Also within this fourth category, Ronen shows in figure 10 an embodiment in which instead of a call being made, the subscriber enters details and a password into a web page form which is passed to the telco and used to generate an item on the subscriber's telephone bill.

This fourth category has not become widely known or used. This may be partly because many subscribers do not have easy access to a second line to make the required call, and because it may be time consuming and cumbersome. The user has to use two systems and interfaces, and has to find and input the correct phone number. Also, the service provider loses control of a crucial link at a crucial time in the buying process. The service provider cannot actively assist in making the call, which may be particularly significant for high volume applications. If the subscriber finds the number busy, the sale may be lost, and the service provider has no way of tracing why the sale was lost. Under heavier than engineered usage, it will be the telco, not the web-merchant that determines which subscribers will be unsuccessful making the connection. Short of considerable (expensive) overprovisioning of telephony access, there is no known way to ensure all telephony connections complete successfully.

Consequently, there remains a need for a cost effective e-commerce system which is simple for consumers to use, is not prone to fraud, and allows merchants to respond dynamically to changes in market pressures.

As used herein, the term "PSTN" generally stands for "Public Switched Telephony Network", but in the context of this invention is intended to encompass a telecommunications network of any sort, which may include for example the public switched telephony network, a wireless network, a private carrier network, an enterprise network, a virtual private network, a telephone or data network provided to subscribers over cable TV or powerline infrastructure, and so on.

The term "connection" is intended to encompass for example, a PSTN-PSTN connection, e.g. a voice or data telephone call, an IP-PSTN connection, a PSTN-IP connection, an IP-IP connection.

The term "subscriber" is intended to encompass a person subscribing, a group of persons subscribing jointly, such as the employees of a company, and an agent (human or automated) of any of the above, arranged to accept calls on behalf of the person or group.

The term "service" is intended to encompass providing access to data, whether the data is accessed or not. It is also intended to encompass services such as sale of goods, e.g. by mail order, and sale of any sort of services including those not provided over the data network. An example is household maintenance services.

The term "service provider" is intended to encompass also agents of the service provider (human or automated) such as a calling service contracted to the service provider for making calls on behalf of the service provider.

### SUMMARY OF THE INVENTION

According to the invention, there is provided a system for facilitating e-commerce transactions which addressed at least some of the deficiencies of the prior art.

According to a first aspect of the invention there is provided a method of using a telecommunications network for authorising a service provided by a third party service provider to a subscriber of the telecommunications network, the network having an associated subscriber billing system, arranged to bill the subscriber and capable of crediting or debiting the service provider for services authorised by the subscriber, the method comprising the steps of:
making a connection to the subscriber, the connection being associated with the service, to obtain an authorisation from the subscriber for an amount corresponding to the associated service to be billed by the network billing system, and
authorising the associated service to be provided if the subscriber authorises the billing.

### ADVANTAGES

One of the advantages of having the authorising connection made to the subscriber (rather than having the subscriber make the connection) is that it is easier to handle large scale operations. In the event of congestion caused by many subscribers desiring access to the same service provider at the same time, the service provider can control the response, e.g. service the subscribers in order of receipt of their requests or according to any other scheme of their choosing. Additionally, the service provider may provide immediate indication back to the subscriber of congestion and possibly estimate the delay. The service provider can then reduce the degree to which telecommunications facilities need to be over-provisioned and reduce operating costs. It is easier for the service provider to deal with high volumes of business by arranging for agents to make connections to subscribers to deal with any overflow, and thus avoid missing any business. Even a telco running the network could act as an agent on behalf of the service provider to make authorisation connections.

Another advantage is that it is usually easier for a subscriber to answer a connection than to make one. In some circumstances, e.g. where the subscribers phone line is being used for accessing the service provider over the Internet, it may enable the subscriber to use the services without needing a second phone line to make the connection.

Another advantage is that it enables telemarketing of services to be combined with authorisation of payment for the service in the same connection.

A consequence of making it easier to use an existing billing system of a telecommunications network, for paying for service provision, is that it becomes more economical to levy many small charges for high volumes of small transactions. There are billions of dollars invested in sophisticated billing systems and complex agreements between telecommunications networks to enable billions of calls to be charged to subscribers, and distribute revenues between the hundreds of network providers. It becomes easier to leverage this to enable services such as web based services to be charged for. This applies particularly to services such as news or other information services which subscribers may want to browse, but not pre-pay for. The already rapid rate of growth of such services may be increased dramatically if services that have not been easy to charge for in the past can now be charged for more easily.

A known collect call involves obtaining authorisation from a subscriber to add a billing amount to the subscribers telephone bill. However in this case only the call is authorised, not a billing amount corresponding to the service.

### PREFERRED FEATURES AND THEIR ADVANTAGES

Preferably the network comprises a telephone network and the connection comprises a call to a subscriber voice terminal. An advantage arises from the large installed base of such terminals, the associated well-established billing systems, and ease of use for subscribers, that make it attractive to service providers.

Preferably the request is sent to the service provider by means of a data network. An advantage is that data networks such as the Internet are particularly suited for advertising to, and informing a subscriber about services offered, and enabling a subscriber to transmit detailed instructions concerning the purchase.

Preferably the network comprises a telephone network, and the connection comprises a telephone call to a telephone terminal of the subscriber. One of the advantages of this is the wide installed base of such terminals. Another is the suitability of the existing telephone network billing systems. Another is the security of telephone networks, and the trust that subscribers have in their security. A service provider can be certain that the call will be routed to a unique subscriber line. This contributes to a high confidence that an authorisation received for a service has come from the subscriber, and is not fraudulent. Furthermore, the known auditability of telephone network infrastructure provides a deterrent against fraud.

Preferably after receiving the authorisation, a separate connection from the service provider is made for billing of the authorised service using a call signalling path of the telephone network to pass information relating to the billing. A consequence is that call charges can be reduced and network bandwidth can be conserved. Also, the risk of fraud by a subscriber may be reduced if a separate connection is made for passing billing information. If the subscriber need not be a party to this call it can be made more secure from interference by the subscriber. Preferably the connection reaches the subscriber at the same terminal from which the request was sent. An advantage of this is ease of use for the subscriber. A service provider can be more confident that the authorisation is genuine.

Preferably the connection is made using a telephone call over a subscriber line, the network being arranged such that if the subscriber line is busy, an indication of the incoming call will be sent to the subscriber over a data network. An advantage of this is that it enables subscribers with a single telephone line to use it to access service providers over the data network, and yet simultaneously receive the authorisation call over the same line. The benefits of the authorisation call reaching the same terminal from which the request was made, can thus be made available to the desirable combination of data network requests and telephone call authorisation. This combination can provide good security with ease of use advantages while making use of existing network resources.

Preferably the method comprises the step of conducting a dialogue with the subscriber to obtain information relating to the authorisation, over the connection. This enables the authorisation to be more than just a yes or no. The dialogue may include menus of choices presented to the subscriber, to suit complex services, or may include personal questions to verify the identity of the subscriber.

Preferably the service provider identifies a calling agent located closer to the subscriber than the service provider, the step of making the connection comprising the step of instructing the calling agent to make the connection, and the step of obtaining authorisation comprising the step of receiving authorisation via the agent. An advantage of this is that the service provider need not have the hardware to make the connection directly, high volume operations can be outsourced more easily, many service providers can share a common connection making facility. Also, the calling hardware can be located wherever convenient, remote from the service provider if appropriate. The authorisation connection may be less expensive if for example the connection is a telephone call made from within a local calling area of the subscriber.

Preferably the call is directed to a pre-authorised agent to be accepted on behalf of the subscriber. An advantage is that the agent may act as a filter, to save time for the subscriber. The agent may act for many subscribers. It may offer other services to subscribers including billing services, or dealing with the telephone network billing system. An employer might set up an agent to accept and pay for services ordered by its employees. Even a telco could act as an agent on behalf of the subscriber.

Preferably the remote server is located in a local call area of the subscriber. An advantage is that the connection may be less expensive.

Preferably the billing amount is determined according to input from a service provider responsible for providing the service. An advantage is that the range of services can be wider or more flexible if the amount billed can be tailored.

Preferably, the billing amount is determined according to input from the subscriber An advantage is that more complex services with more options, or room for negotiation, can be introduced.

Preferably, the authorisation can be in respect of a billing amount that is a credit. An advantage is that it enables a wider range of services. It could include those that the service provider desires from the subscriber, and is willing to pay for This could enable subscribers to be paid small amount for completing on-line consumer surveys, or for receiving specific advertising. Gambling winnings payments, contract or salary payments, and refunds of earlier payments could all be made.

Preferably the method further comprises the step of passing the authorised billing amount to a billing system of the network. This may be carried out by the network or by the service provider or both. It may be carried out automatically by the network using information transmitted over the connection. Alternatively it may be carried out by a second connection made by the service provider to the network or to the billing system directly. Such a connection might be made over a data network, or over signaling channels of a voice network without needing a voice channel to be set up.

### OTHER ASPECTS OF THE INVENTION

### Network Aspect

A further aspect of the invention provides a method of operating a telecommunications network having an associated billing system to enable the billing system to be used for billing for services provided to subscribers by third party service providers, the method comprising the steps of:
providing a connection to the subscriber to obtain authorisation from the subscriber for the service,
determining that the connection is one which is for authorising an associated service,
determining if the subscriber has authorised it,
determining an amount to be billed, and
causing the amount to be billed to the subscriber, if the billing has been authorised by the subscriber.

### Billing Aspect

A further aspect of the invention provides a method of using a billing system for a telecommunication network, for billing a subscriber to the telecommunication network, the billing relating to a service provided by a third party service provider coupled to the network, the method comprising the steps by the network of:
receiving from the service provider an indication of a billing amount, an indication of the identity of the subscriber, and an indication that the subscriber has authorised the billing of that amount, to pay for the service, and
causing the billing amount to be billed to the subscriber, and a corresponding credit made to the service provider by the billing system.

### Billing Aspect from Service Providers View

A further aspect of the invention provides a method of causing a subscriber to a telecommunication network to be billed by a billing system of the telecommunication network for a service provided by a third party service provider, the method comprising the steps of:
obtaining from the subscriber an authorisation to bill an amount for the service, and
sending to the billing system of the network, an indication of the billing amount and an indication of the identity of the subscriber, to cause the billing amount to be billed to the subscriber, and a corresponding credit to be made to the service provider by the billing system.

By enabling the third party service provider to use the existing billing infrastructure, billing is simplified for service providers, and less costly compared to other known billing methods, particularly for small amounts. For the telecommunication network (or other utility), there is the benefit of being able to charge for use of the billing system, whether or not a connection is made over the network (or the utility is used) and thereby getting more return from the heavy investment already made in the billing system.

Preferably the step of obtaining authorisation comprises the step of using a connection between the subscriber and the telecommunication network to obtain authorisation. An advantage of this is improved security since the network can verify more easily that the authorisation is genuine. This is because a connection made over the subscriber's own connection to the network can be made under the control of the network, and recorded by the network. Also this gives the network an opportunity to prevent or limit authorisations by subscribers with poor credit records before the service is provided to them. This might save service providers from needing to perform credit checks for each user.

Preferably the connection is initiated by the service provider, or the network. This can improve security and make it easier or more convenient for the subscriber. Also, any congestion can be handled by the service provider more easily, as discussed above.

Preferably the connection comprises a voice call and the authorisation is made by the subscriber making a keypress.

Preferably the amount is determined by the third party service provider. This gives the third party service provider more flexibility to offer discounts or offer a range of options.

Preferably the step of sending an indication of the amount and the identity are carried out by the service provider, and the service provider further sends an indication that the subscriber has authorised the billing of that amount.

Having the service provider take these steps rather than the network means that they can be tailored more easily to the service providers needs, and perhaps reduce the load on the network and reduce charges to the service provider. The alternative of the network doing these steps has advantages in terms of reduced costs because the network may already have necessary hardware installed e.g. trunk connections, which can be adapted easily for these purposes.

### Billing Agent for Subscriber Aspect

A further aspect of the invention provides a method of using an agent to bill for a service provided by a service provider, the service provider using a telecommunication network to request authorisation to have the service billed by a billing system of the telecommunication network, the agent having an agent's billing system, the method comprising the steps by the agent of:
sending an authorisation to the service provider over the telecommunication network for the service on behalf of the subscriber,
receiving a bill including a billing amount for the service from the network billing system, and
causing the amount for the service to be paid to the network billing system, and a corresponding agent's amount to be billed to the subscriber by the agent's billing system.

An advantage of having the connection accepted indirectly on behalf of the subscriber is that it enables the service provider to use the network billing system, while the subscriber is not constrained to being a subscriber to the network and having the service billed as part of a network bill. It also enables subscribers connected to the network through private exchanges or private networks e.g. where their employer is the agent, to have the employer pay for the service if appropriate, and use the employers internal billing system to pass on the bill to an appropriate internal department or project account.

### Utility Billing Aspect

A further aspect of the invention provides a method of causing a subscriber to a utility to be billed by a billing system of the utility for a service provided by a third party service provider, the method comprising the steps of:
obtaining from the subscriber an authorisation to bill an amount for the service, and
sending to the billing system of the utility, an indication of the billing amount, an indication of the identity of the subscriber, and an indication that the subscriber has authorised the billing of that amount, to cause the billing amount to be billed to the subscriber, and a corresponding credit to be made to the service provider by the billing system.

### Negotiated Billing Aspect

A further aspect of the invention provides a method of billing for a transaction between subscribers of a telecommunications network, the communications network including a network billing account associated with at least one of the subscribers, the method comprising the steps of:
receiving agreement over the network to a billing amount for the transaction;
causing execution of the transaction with the at least one subscriber; and
causing a billing system associated with the network to obtain payment for the transaction through the network billing account of the at least one subscriber, the payment being determined in accordance with the billing amount.

This aspect of the invention also provides a method of conducting a transaction between subscribers of a telecommunications network, comprising the steps of:
confirming over the network agreement to a billing amount for the transaction;
executing the transaction with the at least one subscriber; and
causing a billing system associated with the network to obtain payment for the transaction through the network billing account of the one subscriber, the payment being determined in accordance with the billing amount.

In accordance with this aspect, a first subscriber of the telecommunications network establishes a billing amount, with a server of the network, for the provision of goods or services. A second subscriber of the network, desiring the goods or services offered, initiates communication with the first subscriber over the network. The network server intercepts the communication, and notifies the second subscriber of the established billing amount. The second subscriber then transmits either an acceptance or rejection of the billing amount. If the second subscriber accepts the billing amount, the network server transmits an acceptance signal to the first user, thereby causing the first user to provide the requested goods or service to the second subscriber. At the end of the transaction, a billing system associated with the network debits the network billing account of the second subscriber in accordance with the billing amount, and credits the network billing account of the first subscriber a corresponding amount. Alternately, the first subscriber may initiate communication with the second subscriber, notify the second subscriber of the billing amount, and then allow the second subscriber to accept or reject the billing amount. Consequently, this aspect of the invention allows the telecommunications network provider and network subscribers to bill other subscribers based on the class of the transaction requested, rather than simply the duration of the communication.

In one variation, the second subscriber is provided with notification of the billing amount throughout the transaction, thereby allowing the second subscriber with the choice of terminating or continuing with the transaction based upon notification of each billing amount. Alternately, the first and second subscribers may negotiate or agree upon a billing amount and then notify the network server of the agreement by individually transmitting notification of the billing amount to the network server. With these variations, the cost of the transaction may be billed to the network billing account of the second subscriber throughout the transaction, or after completion of the transaction. This aspect of the invention has the advantage of allowing the billing amount for the requested transaction to be determined dynamically throughout the transaction.

Further aspects of the invention provide corresponding methods of requesting such services by subscribers, corresponding apparatus for carrying out any of the above methods, and software for carrying out any of the above methods.

Any of the preferred features may be combined with any of the aspects set out above as would be apparent to a skilled person.

Other advantages will be apparent to a skilled person, particularly in relation to any further prior art other than that discussed above.

### BRIEF DESCRIPTION OF THE DRAWINGS

The preferred embodiments of the invention will now be described in more detail by way of example only, with reference to the accompanying drawings, in which:
Fig. 1 shows a prior art arrangement,
Fig. 2 shows an embodiment of the invention in schematic form to indicate a sequence of some of the operations of the elements;
Fig. 3 shows an embodiment showing telephone authorization of a web page, and billing using the telephone billing system;
Fig. 4 shows another embodiment using an Internet Call Waiting server;
Fig. 5 shows another embodiment in which the service provider uses a calling server;
Fig. 6 shows another embodiment in which a calling server calls a local switch to cause billing;
Fig. 7 shows an arrangement for billing using an AIN;
Fig. 8 shows another embodiment using an Intranet and a PBX;
Fig. 9 shows another embodiment using voice prompts to communicate with the subscriber;
Fig. 10 shows another embodiment using IP telephony to communicate with the subscriber;
Fig. 11 shows another embodiment involving an agent of the subscriber; and
Figs. 12 to 14 illustrate embodiments involving negotiated billing.

### DETAILED DESCRIPTION OF THE PREFERRED EMBODIMENTS

### Fig. 1. Prior Art

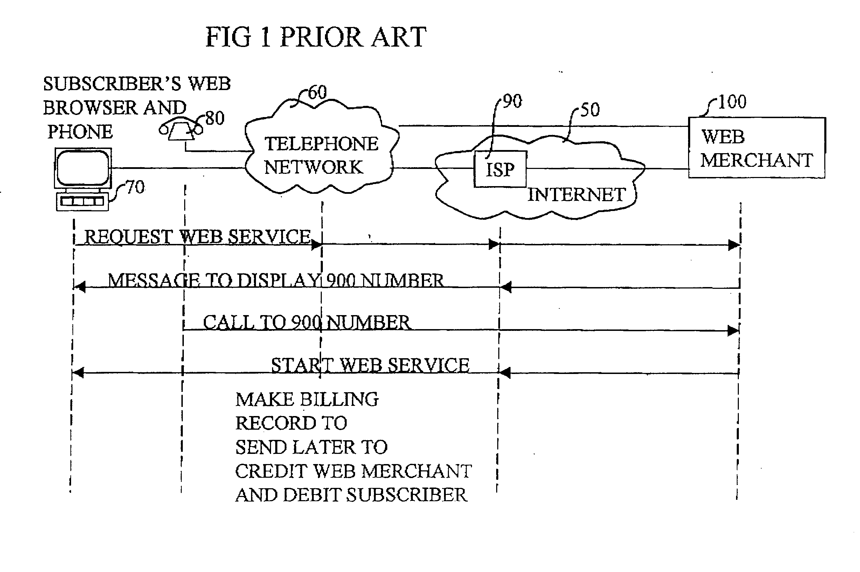

Fig. 1 shows a sequence chart indicating some of the steps in the arrangement known from Ronen. A subscriber is logged onto the Internet 50 via the public telephone network 60. It is assumed that the subscriber has two telephone lines, one for coupling his computer 70 to the Internet, the other coupled to the user's telephone terminal 80. An Internet Service Provider (ISP) 90 acts as an interface between the subscriber and the Internet. A web merchant 100 is also connected to the Internet, and offers a service over the Internet. The web merchant also has a connection to the telephone network 60.

The subscriber requests the web service via his Internet connection. The web page of the web merchant, which is sent back to the subscriber's web browser for display, includes a message requesting the subscriber to telephone a '900' number. The subscriber can only gain access to the web service provided by the web merchant if they call the 900 number. The subscriber makes the call from their telephone terminal. The web merchant detects that the call has been made, and starts the web service. The telephone network makes a billing record which will credit the web merchant with a proportion of the cost of the call, and the subscriber will be debited for the call.

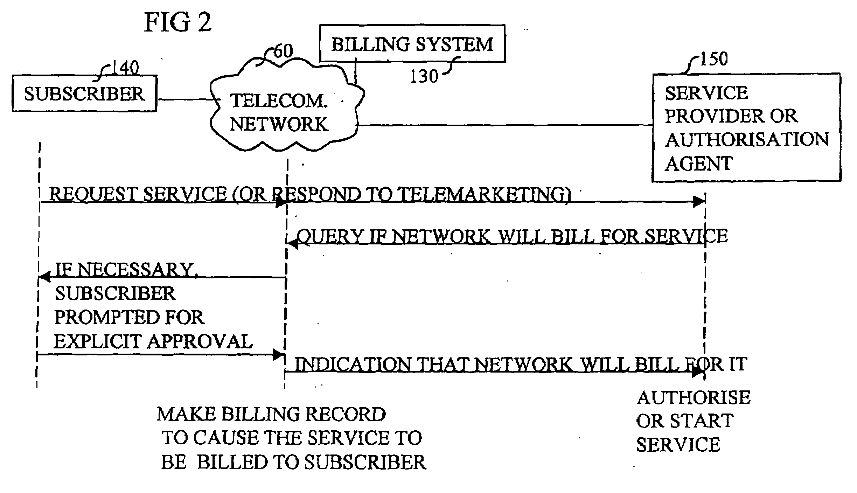

### Fig. 2. Embodiment of the Invention

Fig. 2 shows a sequence chart showing some of the principal steps according to a first embodiment of the invention. A telecommunication network 120 has an associated billing system 130. A subscriber 140 is connected to the telecommunication network. A service provider, or authorization agent 150, is also connected to the telecommunication network.

The subscriber requests a service, or responds favourably to a service provider soliciting customers. The subscriber may use the telecom network to make the request, or it may be made over a different network. The service provider establishes if the telecom network will use its associated billing system to bill the subscriber for the service. If necessary, the subscriber is prompted by the telecom network for explicit approval, if there is no prior arrangement with the subscriber.

The service provider or authorization agent receives an indication that the telecommunication network will bill for the service, for example, because the subscriber has given explicit approval over the telecom network. The service provider then authorizes or starts the service. The telecom network passes a billing record to the billing system to cause the service to be billed to the subscriber, and an appropriate proportion of the billed amount will be credited to the service provider. The telco operating the network will effectively charge the service provider or the subscriber a small amount for providing the billing service.

Various ways of carrying out these steps can be envisaged, and some examples will be described in more detail.

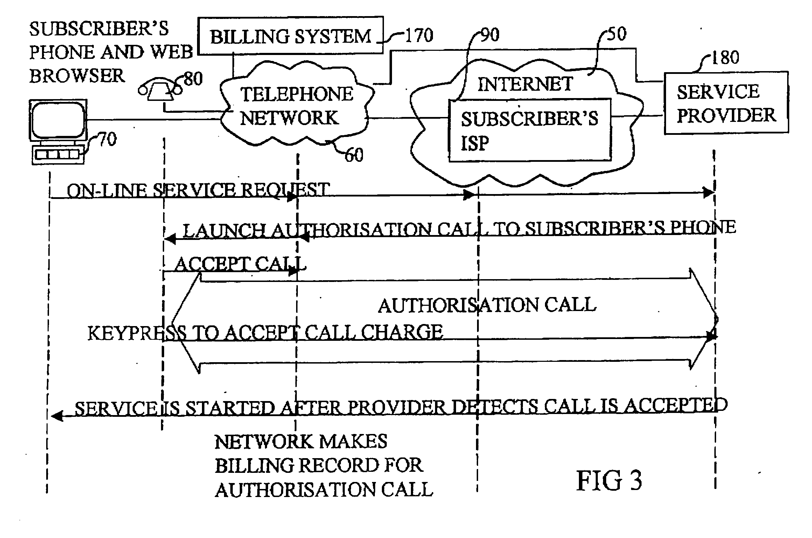

### Fig. 3. Embodiment Using Telephone Authorization

Fig. 3 shows an embodiment using a telephone call to the subscriber to gain authorization, and using the telephone billing system to pay for the service. Many of the elements of Fig. 1 can be seen in Fig. 3. A subscriber is connected to the Internet via the telephone network. The subscriber has a telephone terminal which can use the telephone network at the same time as the subscriber is on-line on the Internet. The telephone network has an associated billing system 170. A service provider 180 is able to receive service requests over the Internet, either through a web page interface, or by e-mail, for example. The service it provides need not be provided over the Internet. For example, it could be a mail order service in which orders and payment may be made electronically by subscribers, and the goods could be delivered by conventional mail services.

The subscriber sends a service request via the Internet to the service provider. The service provider launches an authorization call to the telephone number of the subscriber. The telephone number of the subscriber can be obtained in various ways. It might be entered manually by the subscriber. It might be held by the subscribers ISP and passed to the service provider by the subscribers ISP. Conceivably it could be looked up in some form of electronic database.

The subscriber answers the call and uses this authorization call to accept a charge for the service requested. The authorization call could include a voice prompt from the service provider indicating the amount of the charge and the type of key press required to accept the charge. Alternatively, this information could be provided to the subscriber in a window on his computer screen. Another alternative would be to make use of the display on the telephone terminal, if it is equipped with such a display. The information could be passed to the terminal for display using the ADSI (Analog Display Services Interface) protocol.

The key press to accept the call charge could be a single digit, or, if more security is required, it could include a PIN (Personal Identification Number), for example. Another alternative for accepting the call would be a voice acceptance which could be recognized by speech recognition software running either in the telephone network, or at the service provider. Once the service provider detects the call charge is accepted, it authorizes the service to start.

There are various ways to ensure that the network makes a billing record for charging the subscriber only if he has accepted the charge. If the charge is not accepted, the network may charge the service provider, for example, if the call is a long distance call. As will be described in more detail below, the network may make the billing record to bill the call to the subscriber, based on messages passed within the authorization call. An alternative, also described below is to bill on the basis of messages passed in a separate billing call, not shown in Fig. 3, made by the service provider after the authorization.

Implementation of this arrangement may make good use of existing hardware and software resources with minimal alterations. The telco operating the network may need to set up or simply enable software in local switches or in the billing system to provide the service providers with appropriate secure access, as described below. The service provider needs the capability to call subscribers, and access the network billing system. This may be best provided by third party calling servers as described below, available to many service providers. This is something that the Telco could provide as a further service to service providers. ISP's might want to provide this also.

Finally, subscribers may need to make their phone numbers available, e.g. in their web browser. This could be achieved by a one-off visit to an appropriate web site which would prompt them to enter the phone number and set a cookie in their browser with the phone number.

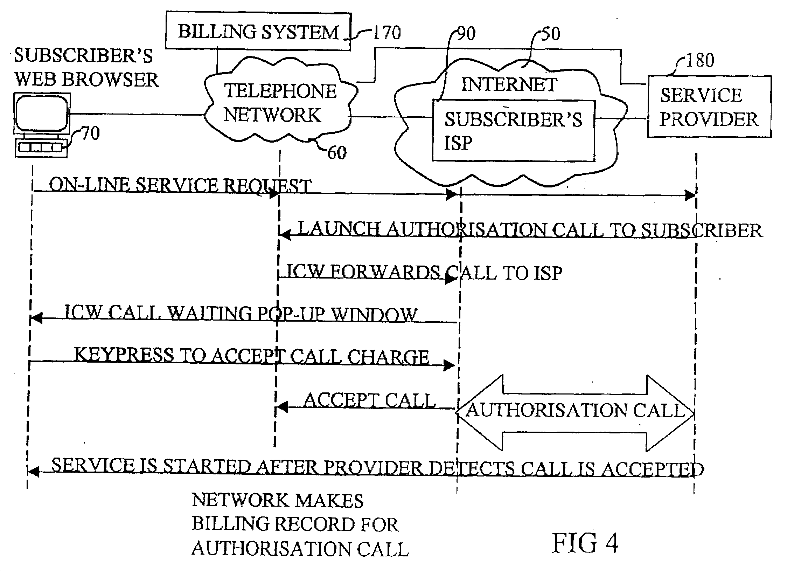

### Fig. 4. Embodiment Using Internet Call Waiting Service

Fig. 4 shows an embodiment for use by a subscriber who has only a single telephone line, and therefore cannot use a telephone terminal when his computer is using the telephone line to access the Internet. The steps of sending an on-line service request, and the service provider launching an authorization call to the subscriber, are similar to the corresponding steps in Fig. 3. However, if the subscriber has subscribed to an Internet call waiting service, the subscriber can be alerted to the authorization call by means of a message appearing on his computer. Internet call waiting services are now publicly available, and detailed descriptions of how they can be used and how they are implemented are available, for example, from a company called "Infointeractive" of Bedford, Nova Scotia, or from patent publication WO 98/07266 of Northern Telecom, the contents of which are incorporated herein by reference. The ICW service involves the telephone network determining that the subscribers line is busy, and forwarding the call to the subscribers ISP. The ISP determines if the subscriber is on-line and, if so, provides a notification to the subscriber of the incoming call. The subscriber can suspend their Internet connection, with the ISP, and answer the incoming call. Authorization can then proceed as described with relation to Fig. 3. After the authorization call is completed, the subscriber can return to the suspended connection to the Internet.

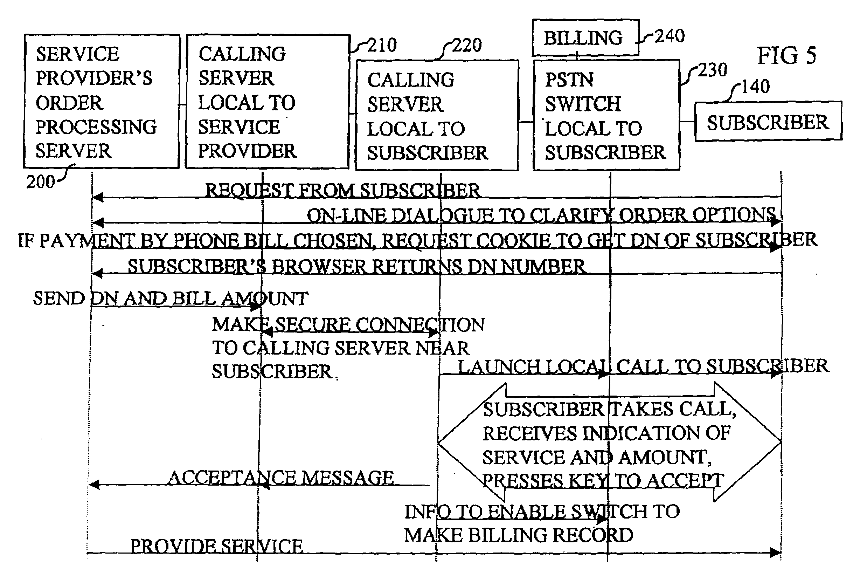

### Fig. 5. Embodiment in Which Service Provider Uses a Calling Server

Fig. 5 shows a sequence chart illustrating some of the actions in an embodiment in which a service provider uses a calling server to make the authorization call. A request from the subscriber is passed to the service providers order processing server 200. This may be carried out over the Internet, in which case there may be an on-line dialogue between the subscriber and the order processing server to clarify any order options. If payment by telephone bill is chosen, the order processing server requests a cookie to get the phone number (DN) of the subscriber. The subscribers browser may return the subscriber's phone number. The order processing server can then send the subscriber's telephone number and the amount to be billed to a calling server 210. This could be done over the Internet.

There are many published examples of how to implement a calling server controlled over the Internet or other data network. One is in PCT/CA96/00574, the contents of which is hereby incorporated by reference. Another is US 08/948975, the contents of which is hereby incorporated by reference. The calling server could belong to the service provider, or it could be provided by a third party agency. The calling server may be able to make an authorization call over the telephone network directly to the subscriber (not illustrated).

To avoid long distance telephone charges for this call, it may be more convenient to make a connection to another calling server 220 local to the subscriber, as illustrated. This calling server local to the subscriber could belong to the service provider, or to a third party agency. A secure connection between the two calling servers could be provided over the Internet.

The calling server local to the subscriber then launches a local call to the subscriber via the local switch in the telephone network. In this authorizing call, the subscriber may authorize the charge to be billed on his telephone bill in the manner described above with respect to Figs 3 and 4.

The calling server which launched the call detects the response and returns an acceptance message to the service provider's order processing server. The calling server which launched the call can pass the information for the switch to make the billing record, either within the authorization call or separately, either in a second call, or by a direct connection to the billing system 240 associated with the local switch 230.

On receipt of the acceptance message, the service provider can enable the service to be started.

It is conceivable that the calling server agency service could be provided by the telephone network rather than a third party. Furthermore, the advantages of using a calling server may apply whether the order is received on-line or by any other means, including by voice telephone connection, or by fax.

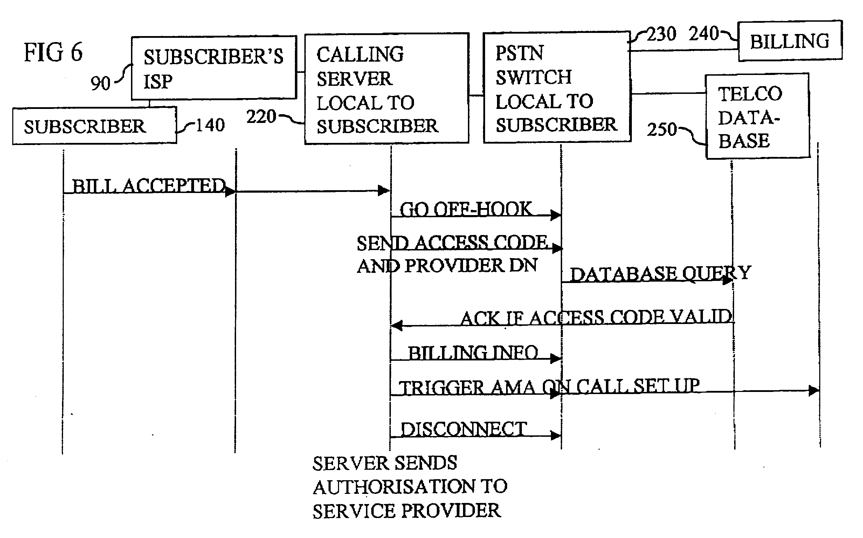

### Fig. 6. Billing Call from Calling Server

Fig. 6 shows a sequence chart with some of the steps involved in the calling server 220 causing the telephone network to make a billing record. The subscriber 140 accepts the bill in some manner, for example, as described above, with respect to Figs 3 to 5. If it is accepted by means of an Internet access, then it would be passed through the subscribers ISP 90 to the calling server 220 local to the subscriber. Even if the calling server obtained authorization in an authorization call, it may be preferable to trigger the billing outside that authorization call, if greater security can be achieved.

In the example shown in Fig. 6, the calling server makes a separate billing call to the local switch. The subscriber is not involved directly in this call, which may reduce the possibility of fraud. The calling server takes a line to the local switch off-hook. The calling server then sends an access code and the subscriber number of the provider, to the local switch, to identify the entity making the billing call. The identity may be verified by the local switch 230, by making a query to a database 250 under the control of the telco which has responsibility for the billing and the local switch. If the access code is valid, it returns an acknowledgment to the calling server. The access code may also include a PIN of the subscriber if appropriate, which may also be validated by the telco.

The calling server can then send billing information such as the amount, and the subscriber phone number to which the amount is to be billed. The calling server can then make use of existing message protocols to cause the local switch to generate and send an AMA (Automatic Message Accounting) record to the billing system 240, on call set up. The calling server can then disconnect, and send an authorization to the service provider to indicate that the network has accepted the billing, so the service can proceed.

### Alternative ways to cause the billing

One possibility is for the telephone network to be arranged to have a certain range of numbers allocated to calling servers so that when calls from these numbers are detected, special billing records are generated. One example would be for the local switch to detect the acceptance keypress described above, and cause a billing record to the subscriber for an amount pre-arranged with the service provider. The amount could be dependent on which of several different numbers are used by the calling server. The amount could be dependent on the duration that the calling server holds the line open. Another possibility would be to have the calling server pass a securely encrypted digital message containing the billing amount, to the local switch which would then decrypt the message and generate an appropriate billing record using its existing billing system.

Another possibility would be for the calling server to access the billing system directly, perhaps by using carrier ID codes (CIC). This could make use of the signaling channels in the telephone network, without needing a voice path to be set up. In this case, there may be no charge for passing such messages over long distance phone networks since very little bandwidth is used if there is no need to set up and maintain a voice path. Furthermore, such signaling messages could also be passed for at least part of their route over the Internet, using Internet telephony techniques. The usual drawback of using Internet telephony, of excessive delays and echoes, would not matter if the path is not being used for voice, only signaling.

Another arrangement would involve the service provider contacting an agent of the subscriber via the data network, e.g. the Internet. The subscribers agent would be authorized to collect auditable proof of identity from the subscribers ISP, which may include details such as the subscribers access telephone number and an authorized telephone number (supplied to the ISP by the subscriber as a condition of authorization). The agent could generate an AMA record in the appropriate format and send it directly to the telephone network billing system. This would have the advantage that none of the physical infrastructure of the telephony network except the billing infrastructure is used.

A variation on this arrangement would involve the agent sending the AMA not to the telephony network, but to an independent billing system. The independent billing system could be one run by the ISP or by a third party. This example is intended to be encompassed by the billing aspect of the invention. The Internet would be an example of a telecommunication network, and the ISP billing system would be a billing system for this network. It has the advantage that it would not be necessary to use the telephone network billing system.

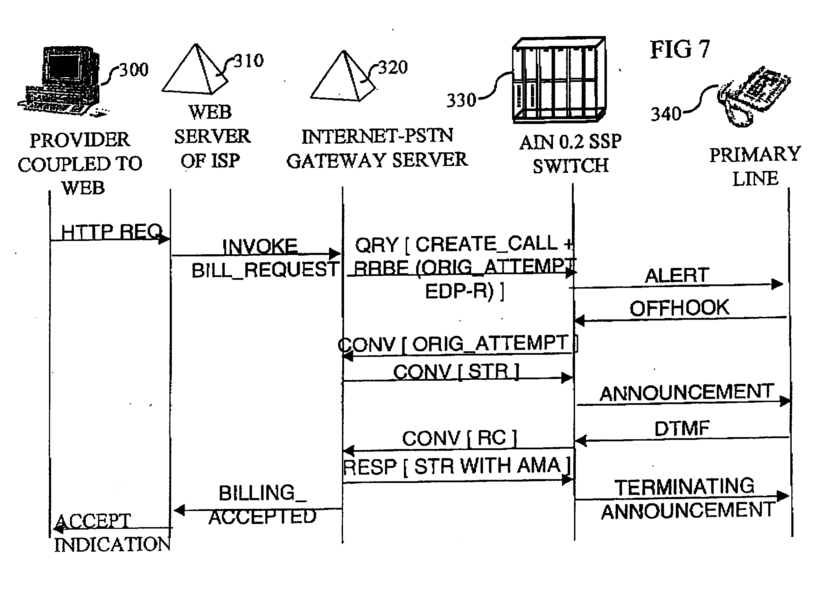

### Fig. 7. Embodiment Using Ain to Generate Billing Record

In Fig. 7, a sequence chart is shown with some of the steps of an embodiment using an AIN (Advanced Intelligent Network). The subscriber requests a service from a web-based service provider 300. In this scenario, the service provider makes a single call to the subscriber who is coupled to a local switch 330 which is AIN capable. The local switch is able to generate a billing record which is sent to the billing system, without needing a separate billing call.

The service provider sends an HTTP (Hyper Text Transfer Protocol) request to its ISP 310. The ISP sends a remote procedure call across the Internet to an Internet-PSTN gateway 320 to invoke a billing request. The gateway is an example of a calling server. This gateway makes use of an AIN function to create a call to the subscriber. The AIN function is a request report basic call model event (RRBE). This function is used to trigger a predetermined event. In this case, the event is the acceptance of the charge by the subscriber, and this event can be made to trigger the creation of a billing record which is sent to the billing system.

The AIN switch causes the subscribers line to ring, prompted by the gateway sending an origination request. The subscriber takes his telephone 340 off-hook. This is detected by the local switch and an acceptance message is sent back to the gateway. The gateway and the local switch can communicate by sending CCS7 TCAP (Transaction Capabilities Application Part) messages. CONV (Conversation) is such a message, as is RESP (Response).

In response to the acceptance of the call by the subscriber, the gateway sends a CONV [STR] (Send To Resource) message. This would cause a predetermined announcement to be played into the subscriber line. Such speech generation or recorded speech playback facilities may be provided in the switch or externally. The announcement to the subscriber might indicate the amount of the charge and what it relates to, and which keys to press to accept the charge. The subscriber would make key presses on his terminal to generate DTMF tones to accept the charge. The switch would detect these, and pass a response to the gateway. The gateway may verify that the correct acceptance code has been received, and cause an acknowledgment announcement to be presented to the subscriber, which may be part of a terminating announcement. The gateway then sends a response (RESP [STR with AMA]) to the switch, to cause it to generate an AMA record which is sent to the billing system in the usual way.

The switch may send an acknowledgment that this has occurred to the gateway. The gateway can pass this back to the service provider, who now knows the bill has been accepted, to pay for the requested service.

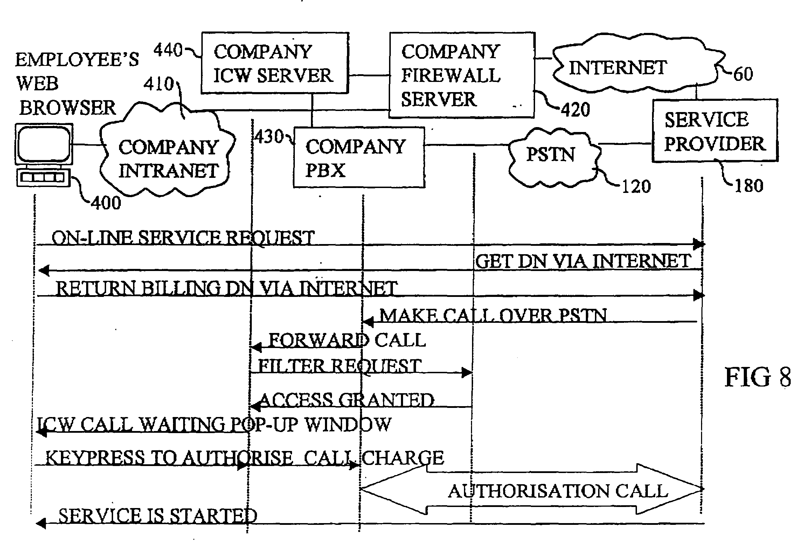

### Fig. 8. Embodiment for Use with an Intranet

Fig. 8 illustrates an embodiment using a company Intranet, and an Intranet call waiting service. An employee has a computer 400 running a web browser and coupled to a company Intranet 410. The employee requests an on-line service over the external Internet 50 via a company firewall surfer 420. The service provider 180 is coupled to the Internet and has a calling server coupled to the PSTN. The company has its own PBX 430, and an internal Internet call waiting server 440.

The service provider obtains the telephone number of the employee over the Internet from the employee's own computer. However, the telephone number returned as representing the employee is arranged to be a dedicated billing telephone number to enable the company to distinguish bills for such services from bills for ordinary telephone calls.

The service provider then initiates the authorizing telephone call over the PSTN via the company PBX 430. The company PBX forwards the call to a filter which could be at the ICW server 440, or at the company firewall server 420, or any other location where a filtering database can be located and accessed. The filtering could take place at the company PBX 430. If the filter grants access to the number given, the company ICW server will cause a window to appear on the employee's computer. The employee can authorize the call charged either by a keyboard button entry, or other input means. The Internet call waiting server detects the keypress and forwards an indication to the PBX that the authorization call is accepted. The service provider can then initiate billing in any of the ways set out above, and can initiate the service.

This method enables companies to control who can solicit services and which employees can access which services. It also enables services to be authorized from an employee's computer without requiring a separate telephone call to the employee. This could be useful if, for example, the employee is away from his telephone. For example, he could be connected to the company Intranet from home, or from a hotel room.

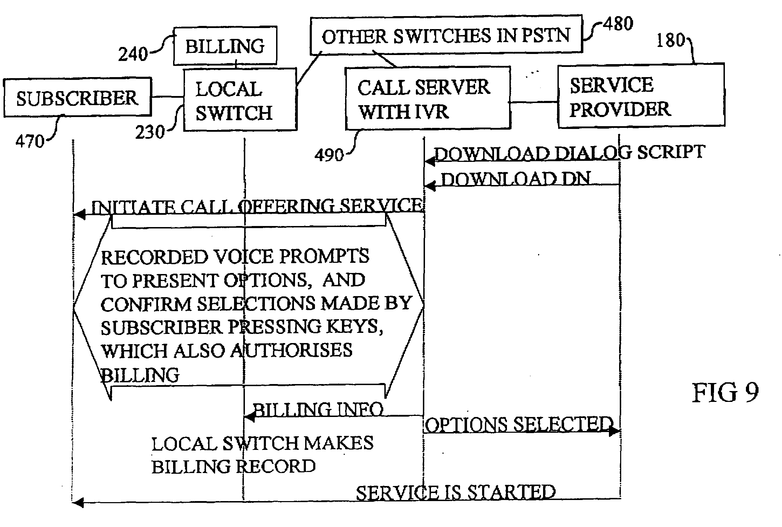

### Fig. 9, Embodiment Using Voice Only Interface to Subscriber

Fig. 9 illustrates an embodiment in which the subscriber is able to authorize a service without access to a computer, using only his telephone terminal. The subscriber 470 is coupled to the local switch 230 which has an associated billing system 240. Other switches 480 in the PSTN are illustrated. The service provider 180 is coupled to a call server 490 which has the capability of presenting voice prompts, either pre-recorded or synthesized.

The call server with the voice prompt capability, and interactive voice response (IVR) capabilities may need to have dialogue script passed to it by the service provider. The service provider may also download the telephone number of the subscriber. The call server initiates the call to the subscriber, offering a service, or responding to a request from the subscriber made in some other way. In the call to the subscriber, the call server may provide voice prompts to present options, and confirm selections made by the subscriber.

The subscriber responses may be made by pressing keys, in which case the call server would need a DTMF receiver to detect the responses. An alternative would be to provide speech recognition capabilities in the call server. In this way, the subscriber can authorize verbally a billing for a service. When this authorisation is detected by the call server, it may alert the service provider, and cause the local switch to make an appropriate billing record, in one of the various ways described above. Finally, the service provider can initiate the service which is to be billed.

### Fig. 10. IP Telephony Embodiment

Fig. 10 illustrates an embodiment in which IP (Internet Protocol) telephony is used. In principle both ends of the authorization call could be carried out using IP telephony, or either end could be IP telephony-based, with the other end being conventional telephony, if a suitable gateway is provided.

An on-line subscriber 520 is coupled to the Internet 60 via a local switch 230. An alternative to the local switch would be connection to the Internet via cable. The service provider is coupled to an IP telephony call server 530, having voice capabilities. As in Fig. 9, the service provider may need to download dialog scripts to the call server. In this case, the IP address of the subscriber would also be downloaded.

The call server initiates an IP call offering the service. The remaining steps set out in Fig. 9 apply equally to this embodiment.

In principle, the subscriber need not have a telephone line to get Internet access. In this case, it would be conceivable to continue to use the telephone network billing system, with charges only relating to services provided, not to telephone calls.

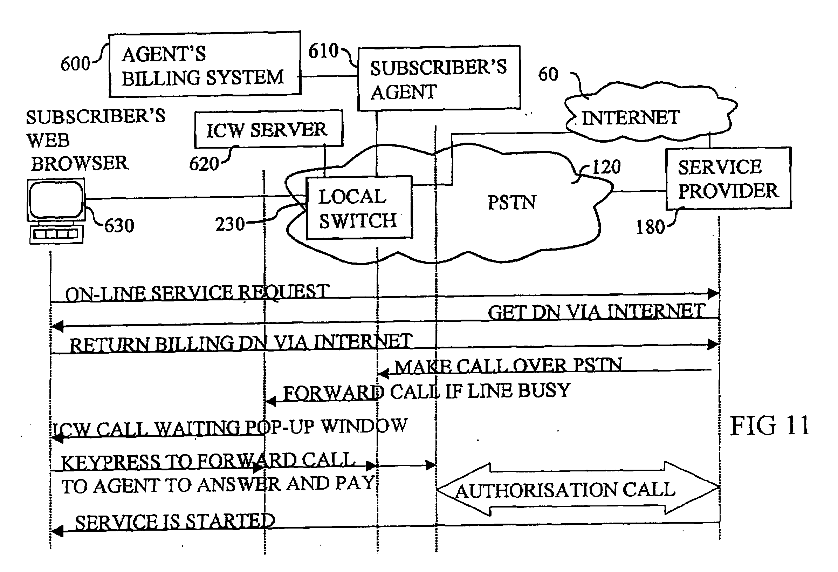

### Fig. 11, Embodiment Using Billing System of Subscribers Agent

Fig. 11 illustrates a sequence chart for an embodiment in which the authorization call is accepted by a subscribers agent on behalf of the subscriber. The agent accepts a bill from the telephone network, and passes on the charge to the subscriber using its own billing system 600. The subscribers agent 610 is coupled to the local switch. An ICW server 620 may be used to enable the call to be forwarded to the subscriber's agent, but enable the subscriber to be alerted if he is logged onto the Internet. In principle, the local switch could be arranged to forward the calls to the subscribers agent without needing an ICW server.

Following an on-line service request to the service provider, the service provider gets the subscriber's telephone number over the Internet as described above. The subscriber's web browser 630 may return a specific billing phone number, which could correspond to the subscribers agent. The service provider makes the authorization call over the PSTN to the local switch. If the subscribers line is busy, the ICW server may cause the local switch to forward the call, if busy, to the ICW server, to cause the subscriber to be alerted over the Internet. The subscriber can then indicate over the Internet to the ICW server that the call should be forwarded to a predetermined agent to be answered and to have the bill for the service paid by the agent. The subscriber's agent is able to complete the authorization call and respond to the prompts automatically or manually to enable the service to be authorized.

The service provider recognizes the authorization by the subscriber's agent, and arranges for the local switch to cause a billing record for the subscribers agent's bill. The agent's billing system 600 can then provide a bill for the subscriber. The subscriber's agent may act for many different subscribers and will need to keep a record of which calls are forwarded to it by which subscriber.

The use of an agent's billing system may enable a subscriber to separate their bills for services, from bills for telephone services, for example. Also, it may enable other utilities to compete for the ability to use their existing billing systems to pay for services. For example, the subscribers agent may be another household utility, with a sophisticated billing infrastructure already in place.

### Applications, types of service

Charity donations or political donations could be made by telephone or Internet more easily and administered more cheaply. There would be no need to give credit card numbers by phone, which is time consuming and may give rise to security fears on the part of the subscriber. A single call to solicit donations could be used to achieve authorization to bill the charge to the subscriber.

Many gambling applications can be envisaged. If there is no need for a subscriber to pre-register, it is easier for the subscriber, and there is less administration for the service provider. Also, smaller transaction values can be handled more easily, and winnings can be paid more easily.

Many data provision services would benefit if casual customers could easily be charged a small or nominal amount. News services, newspapers, often provide some information for free, which must be subsidized from other sources of revenue. If they could be charged for, there would be more incentive to enhance such services, add more value and compete for more customers. Other examples of data services include weather information services, stock information, directory services, and so on.

Local household services such as deliveries of food items, take away food, or household maintenance such as window cleaning, could be ordered by phone and paid for in the same phone call. The same sort of services could be ordered and paid for over the Internet, with the charge appearing on the subscribers phone or ISP bill.

### Other Examples, Variations

The subscriber could set the rate if given a choice, e.g. by pressing keys, or the telco could set the rate. The rate could be set by the service provider, either by notifying the telco of the rate, or by choosing one of a number of fixed rates set by the telco. This could be achieved by the service provider having different DNs corresponding to different fixed rates. The service provider could choose which of its DNs to use for a given call.

The associated service can be provided in response to a request from the subscriber, or may be offered to the subscriber unsolicited.

At any point, for example when accessing the service providers web page, the subscriber may be presented with options of paying by various means including credit card or telephone bill, or other utility bill.

The amount billed may be duration dependent, may be chosen by DTMF input, may be data-volume dependent, or service dependent. An example of the latter is when the application is gambling, and the amount paid may depend on the outcome of the gamble. Services could be paid for by using pre-paid phone cards at appropriately equipped public telephone kiosks, or by calling cards. The rate for a given service may be predetermined by the service provider, or may be set at the time of the call. This might enable on-line or telephone negotiation of price. If conference calls or on-line email/Internet conferences could be set up, then auction sales could be conducted, with billing authorization, and actual billing all handled more easily. It could all be handled in the same call.

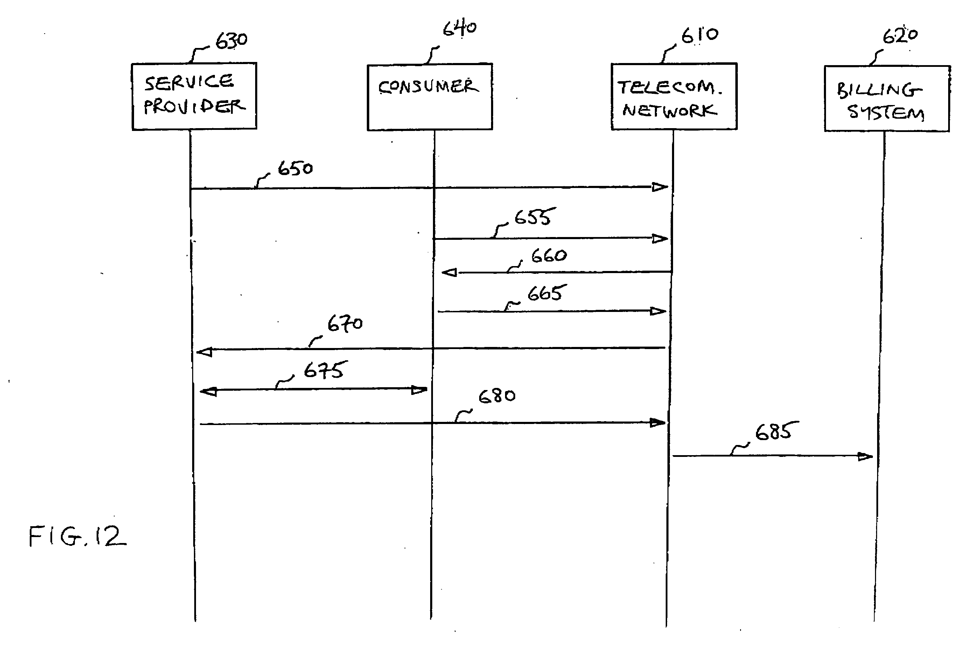

### Figs. 12 to 14 Embodiments Using Negotiated Billing

Fig. 12 illustrates an embodiment in which subscribers of a telecommunications network negotiate the billing amount for a transaction. In accordance with this embodiment, there is provided a telecommunications network 610 which includes a plurality of subscribers, and a billing system 620 associated with the network 610. One of the subscribers comprises a service provider 630, and another of the subscribers comprises a consumer 640. Each consumer 640 has a network billing account to which the cost of transactions may be billed. Preferably, the telecommunications network 610 is a voice communications network, and the network billing account is a telephone billing account.

According to the method, at step 650 the service provider 630 establishes a billing amount, with a server of the network 610, for the execution of a transaction between the service provider 630 and at least one of the consumers 640. For instance, the service provider 630 may be a lawyer who charges a first fixed amount to advise clients on premarital agreements, and a second fixed amount to advise clients on divorce proceedings. Alternately, the service provider 630 may be a construction company who charges a set amount for paving driveways. The billing amount may also include a variable amount in addition to, or in lieu of, the fixed amount. For instance, the service provider 630 may be a wholesaler which ships products to consumers and requires the billing amount to include an amount to cover shipping costs, with the shipping cost being dependent upon the distance between the service provider 630 and the consumer 640 and the weight of the product shipped.

At step 655, a consumer 640 desiring the services of the service provider 630, initiates communication with the service provider 630 over the network 610. The network server intercepts the transmission from the consumer 640, and obtains from the consumer 640 a billing account identifier associated with the consumer 640 and the network address of the service provider 630. At step 660, the network server notifies the consumer 640 of the billing amounts established with the network server. In the preferred embodiment, where the network 620 comprises a voice network, notification of the billing amounts is provided by a pre-recorded message played over the subscriber's telephone handset. Alternately, notification of the billing amounts may be provided over the alphanumeric display of the subscriber's telephone handset using the ADSI protocol. In one variation, where the network 620 comprises the Internet, notification of the billing amounts may be provided via a pop-up window on the subscriber's computer terminal. Other means of providing notification will be readily apparent.

If the consumer 640 does not agree to the billing amount for the transaction desired, the consumer 640 terminates the communication. However, if the consumer 640 agrees to the billing amount, at step 665 the consumer 640 transmits to the network server an agreement signal with respect to the billing amount. In the preferred embodiment, where the network 620 comprises a voice network, the consumer 640 transmits an agreement signal to the network server via an out-of-band signaling mechanism, such SS7 signaling, by pressing an appropriate key on the subscriber's telephone handset. Alternately, the network server may include voice recognition software, and the consumer 640 may transmit an agreement signal by articulating acceptance into the telephone handset. In one variation, where the network 620 comprises the Internet, transmission of the agreement signal may be provided via a hypertext link or virtual confirmation button displayed on the subscriber's computer terminal. Other means of transmitting the agreement signal will be apparent to those of ordinary skill.

If the agreement signal is transmitted at step 665, at step 670 the network server transmits notification of the agreement to the service provider 630 at the network address of the service provider 630, thereby causing the service provider 630 to initiate the requested transaction 675 with the consumer 640. In the preferred embodiment, where the network 620 comprises a voice network, the network server provides notification of an agreement by closing a telephone switch associated with the service provider 630, causing the service provider's telephone handset to ring, and then playing a pre-recorded message over the service provider's telephone handset specifying the transaction chosen by the subscriber 620. Alternately, notification of an agreement may be provided over the alphanumeric display of the service providers telephone handset In one variation, where the network 620 comprises the Internet, notification of an agreement may be provided via a pop-up window on the service provider's computer terminal. Other means of providing notification of an agreement will be apparent to those skilled in the art.

At step 680, the service provider 630 notifies the network switch that the transaction was completed. Alternately, the consumer 640 may notify the network switch of completion of the transaction. The network switch then transmits the billing account number and the billing amount to the billing system 640 for obtaining payment for the transaction, at step 685. Typically, the billing system 640 obtains payment by debiting the billing account of the consumer 640 for the billing amount, and then issuing a cheque to the service provider 630. However, in one variation where the service provider 630 has a network billing account, the billing system 640 obtains payment by debiting the billing account of the consumer 640, and crediting the billing account of the service provider 630. In either case, the billing system 640 may deduct a small surcharge from the amount debited from the consumer 640 for facilitating payment.

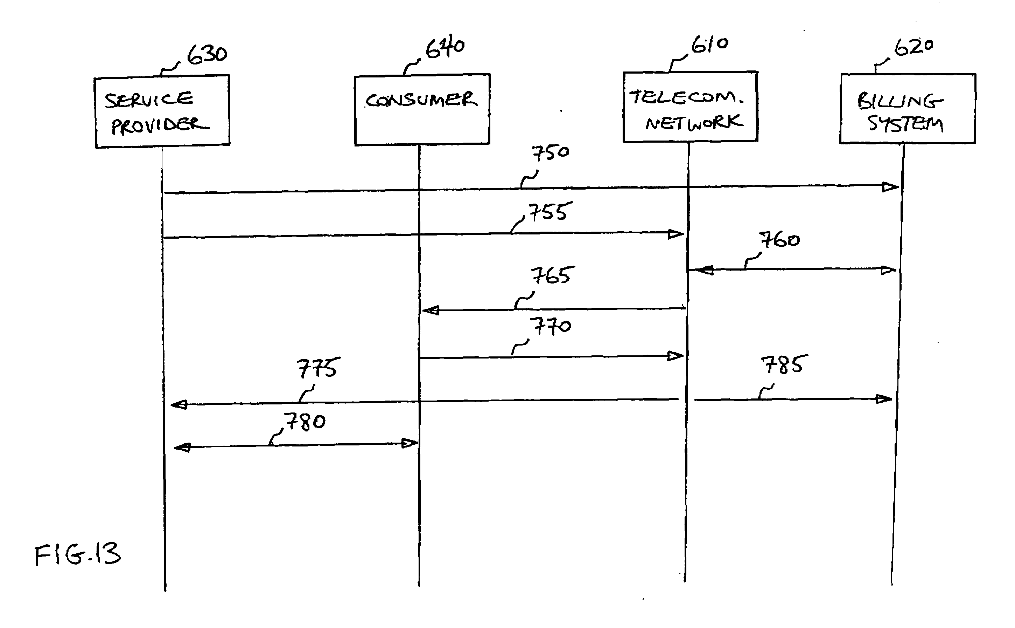

Fig. 13 illustrates one variation of the embodiment shown in Fig. 12. As in the previous embodiment, there is provided a telecommunications network 610 which includes a plurality of subscribers, and a billing system 620 associated with the network 610. One of the subscribers comprises a service provider 630, and another of the subscribers comprises a consumer 640. Each consumer 640 has a network billing account to which the cost of transactions may be billed.

According to this variation of the method, at step 750 the service provider 630 establishes billing amounts, with the billing system 640, for the execution of transactions between the service provider 630 and at least one of the consumers 640. At step 755, the service provider 630 desiring to provide its services to a consumer 640, initiates communication with one of the consumers 640 over the network 620. The network server intercepts the transmission from the service provider 630, and obtains from the service provider 630 the network address of the service provider 630 and the network address of the consumer 640. At step 760, the network server queries the billing server 620 with the network address of the service provider 630, and receives from the billing server 620 the billing amounts established by the service provider 630. The network server notifies the consumer 640 of the services offered by the service provider and the associated billing amounts, at step 765.

If the consumer 640 does not agree to participate in the transactions offered, or to the billing amounts for the transactions offered, the consumer 640 terminates the communication. However, if the consumer 640 agrees to a billing amount, at step 770 the consumer 640 transmits an agreement signal to the network server. If the agreement signal is transmitted at step 770, at step 775 the network server transmits notification of the agreement to the service provider 630 at the network address of the service provider 630, thereby causing the service provider 630 to initiate the requested transaction 675 with the consumer 640. Simultaneously, with the transmission of the notification of the agreement to the service provider 630, and without waiting for completion of the transaction 780, the network switch transmits the billing account number and the billing amount to the billing system 640 for obtaining payment for the transaction, at step 785.

In one variation (not shown), the network server notifies the consumer 640 of billing amounts throughout the transaction, and the consumer 640 must transmit an acceptance to the latest billing amount to continue the transaction. In this variation, preferably, the network server causes the billing system 640 to obtain payment after each acceptance.

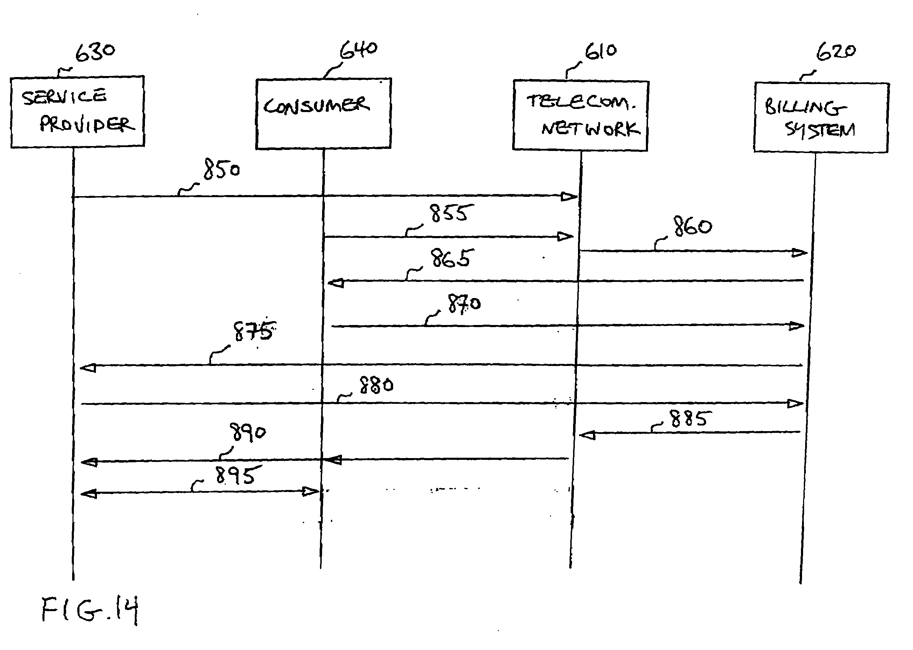

Fig. 14 illustrates another variation of the embodiment shown in Fig. 12. As in the previous embodiments, there is provided a telecommunications network 610 which includes a plurality of subscribers, and a billing system 620 associated with the network 610. One of the subscribers comprises a service provider 630, and another of the subscribers comprises a consumer 640. Each consumer 640 has a network billing account to which the cost of transactions may be billed.

According to this variation of the method, at step 850 the service provider 630 notifies the billing system 640 that it should bill consumers 640 based on an amount negotiated between the service provider 630 and a consumer 640. At step 855, a consumer 640 desiring the services of the service provider 630, initiates communication with the service provider 630 over the network 620. The network server intercepts the transmission from the consumer 640, and obtains from the consumer 640 a billing account identifier associated with the consumer 640 and the network address of the service provider 630. At step 860, the network server queries the billing server 620 with the network address of the service provider 630. The billing system 620 then notifies the consumer 640 that the cost of the communication with the service provider 630 must be negotiated with the service provider 630, and then prompts the consumer 640 to provide a suggested billing amount at step 865. The consumer 640 then transmits a suggested billing amount to the billing system 620, at step 870. As discussed above, in the preferred embodiment where the telecommunications network 610 comprises a voice communications network, the suggested billing amount is preferably transmitted from the telephone handset of the consumer 640 via the SS7 signaling network of the network 610.

Upon receipt of a suggested billing amount from the consumer 640, the billing system 620 notifies the service provider 630 of the suggested billing amount from the consumer 640, at step 875. If the service provider 630 agrees to the suggested billing amount, at step 880 the service provider 630 notifies the billing system 620 of an agreement to the billing amount. On the other hand, if the service provider 630 disagrees with the suggested billing amount, the service provider transmits a counter billing amount at step 880, which the billing system 620 transmits back to the consumer 640 at step 865. Steps 865 to 880 are repeated until one of the parties fails to respond within a predetermined time period, thereby indicating it no longer wishes participate in the transaction, or the offeree notifies the billing system of an agreement to the last suggested billing amount.

If an agreement signal is eventually transmitted to the billing system, at step 885 the billing system 620 transmits notification of an agreement to the network server. The network server then transmits the notification of the agreement to the service provider 630 and to the consumer 640 at step 890, thereby causing the service provider 630 to initiate the requested transaction 895 with the consumer 640. Simultaneously, with the transmission of the notification of the agreement to the network server, and without waiting for completion of the transaction 895, the billing system 640 obtains payment for the transaction.

In one variation (not shown), one of the transacting parties signals the billing system 620 to reinitiate negotiation of the billing amount, at an interval during the transaction 895. As while be appreciated, this latter variation allows the parties to dynamically adjust the billing amount throughout the transaction. In this variation, preferably, the billing system 640 obtains payment after each negotiation. However, it will be appreciated that if the billing system 640 is provided with a signal indicating completion of the transaction, as in the embodiment shown in Fig. 12, the billing system 640 may delay payment until the completion of the transaction.

In summary, with the present invention, for authorizing a service such as a web based service provided by a third party service provider to a subscriber of a telecommunications network, the service provider or his calling agent makes a call to the subscriber, to obtain an authorization from the subscriber for an amount to be billed to the subscriber on their network bill. The web service is then provided and the billing system of the network is arranged to charge the subscriber an amount indicated by the service provider, and credit the service provider. Having the authorizing call made to the subscriber (rather than having the subscriber make the call) makes it easier for the provider to handle large scale operations. Also, it is easier for a subscriber. Notably, existing telephone billing systems are well adapted for billing many small transactions, and distributing the revenue.

The foregoing description is intended only to be illustrative of the preferred embodiments of the invention. Other variations of the described embodiments, and other applications of the invention can be conceived and are intended to fall within the scope of the invention as defined by the claims appended hereto.

## Claims

1. A method of using a telecommunications network for authorizing a service provided by a third party service provider to a subscriber of the telecommunications network, the network having an associated subscriber billing system, arranged to bill the subscriber and capable of crediting or debiting the service provider for services authorized by the subscriber, the method comprising the steps of:
making a connection to the subscriber, the connection being associated with the service, to obtain an authorization from the subscriber for an amount corresponding to the associated service to be billed by the network billing system, and
authorizing the associated service to be provided if the subscriber authorizes the billing.

2. The method of claim 1, the network comprising a telephone network and the connection comprising a call to a subscriber voice terminal.

3. The method of claim 1, comprising the step of receiving a request from the subscriber over a data network for the service.

4. The method of claim 1, the network comprising a telephone network, and the connection comprising a telephone call to a telephone terminal of the subscriber.

5. The method of claim 4 further comprising the step after receiving the authorization, of making a separate connection from the service provider for billing of the authorized service using a call signaling path of the telephone network to pass information relating to the billing.

6. The method of claim 1, the request having been received from a terminal of the subscriber coupled to the network, the connection being sent to the same terminal from which the request was sent.

7. The method of claim 1,the connection being made using a telephone call over a subscriber line, the network being arranged such that if the subscriber line is busy, an indication of the incoming call will be sent to the subscriber over a data network.

8. The method of claim 1, comprising the step of conducting a dialogue with the subscriber to obtain information relating to the authorization, over the connection.

9. The method of claim 1, being carried out by a calling agent for the service provider, further comprising the steps of receiving an instruction from the service provider to make the connection, and sending the authorization to the service provider.

10. The method of claim 1, further comprising the step by the service provider of identifying a calling agent located closer to the subscriber than the service provider, the step of making the connection comprising the step of instructing the calling agent to make the connection, and the step of obtaining authorization comprising the step of receiving authorization via the agent.

11. The method of claim 1 wherein the connection is directed to a pre-authorized agent of the subscriber to be accepted and authorization given on behalf of the subscriber.

12. The method of claim 1, the billing amount being determined according to input from a service provider responsible for providing the service.

13. The method of claim 1, the billing amount being determined according to input from the subscriber.

14. The method of claim 1, the authorization being in respect of a billing amount that is a credit to the subscriber's bill.

15. The method of claim 1 further comprising the step of passing the billing amount which has been authorized, to a billing system of the network.

16. A method of operating a telecommunications network having an associated billing system to enable the billing system to be used for billing for services provided to subscribers by third party service providers, the method comprising the steps of:
providing a connection to the subscriber to obtain authorization from the subscriber for the service,
determining that the connection is one which is for authorizing an associated service,
determining if the subscriber has authorized it,
determining an amount to be billed, and
causing the amount to be billed to the subscriber, if the billing has been authorized by the subscriber.

17. A method of using a billing system for a telecommunication network, for billing a subscriber to the telecommunication network, the billing relating to a service provided by a third party service provider coupled to the network, the method comprising the steps by the network of:
receiving from the service provider an indication of a billing amount, an indication of the identity of the subscriber, and an indication that the subscriber has authorized the billing of that amount, to pay for the service, and
causing the billing amount to be billed to the subscriber, and a corresponding credit made to the service provider by the billing system.

18. A method of causing a subscriber to a telecommunication network to be billed by a billing system of the telecommunication network for a service provided by a third party service provider, the method comprising the steps of:
obtaining from the subscriber an authorization to bill an amount for the service, and
sending to the billing system of the network, an indication of the billing amount, and an indication of the identity of the subscriber, to cause the billing amount to be billed to the subscriber, and a corresponding credit to be made to the service provider by the billing system.

19. The method of claim 18, the step of obtaining authorization comprising the step of using a connection between the subscriber and the telecommunication network to obtain authorization.

20. The method of claim 18, the connection being initiated by the service provider, or by the network on behalf of the service provider.

21. The method of claim 18, the connection comprising a voice call and the authorization being made by the subscriber making a keypress.

22. The method of claim 18, the amount being determined by the third party service provider.

23. The method of claim 18, the step of sending an indication of the amount and the identity being carried out by the service provider, and the service provider further sends an indication that the subscriber has authorized the billing of that amount.

24. A method of using an agent to bill for a service provided by a service provider, the service provider using a telecommunication network to request authorization to have the service billed by a billing system of the telecommunication network, the agent having an agent's billing system, the method comprising the steps by the agent of:
sending an authorization to the service provider over the telecommunication network for the service on behalf of the subscriber,
receiving a bill including a billing amount for the service from the network billing system, and
causing the amount for the service to be paid to the network billing system, and a corresponding agent's amount to be billed to the subscriber by the agent's billing system.

25. A method of causing a subscriber to a utility to be billed by a billing system of the utility for a service provided by a third party service provider, the method comprising the steps of:
obtaining from the subscriber an authorization to bill an amount for the service, and
sending to the billing system of the utility, an indication of the billing amount, an indication of the identity of the subscriber, and an indication that the subscriber has authorized the billing of that amount, to cause the billing amount to be billed to the subscriber, and a corresponding credit to be made to the service provider by the billing system.

26. A method of requesting a service by a subscriber to a telecommunications network, the service being provided by a third party service provider, accessible over a data network, the network having an associated subscriber billing system, arranged to bill the subscriber and capable of crediting or debiting the service provider for services authorized by the subscriber, the method comprising the steps of:
making a request to the service provider over the data network for the service,
receiving a connection over the telecommunication network from the service provider, the connection being associated with the service, requesting an authorization for an amount corresponding to the associated service to be billed by the network billing system, and
providing the authorization over the connection.

27. Apparatus for use with a telecommunications network for authorizing a service provided by a third party service provider to a subscriber of the telecommunications network, the network having an associated subscriber billing system, arranged to bill the subscriber and capable of crediting or debiting the service provider for services authorized by the subscriber, the apparatus comprising:
circuitry for making a connection to the subscriber, the connection being associated with the service, to obtain an authorization from the subscriber for an amount corresponding to the associated service to be billed to the subscriber, and
circuitry for authorizing the associated service to be provided if the subscriber authorizes the billing.

28. A billing system for a telecommunication network, for billing a subscriber to the telecommunication network, the billing relating to a service provided by a third party service provider coupled to the network, the billing system comprising:
circuitry for receiving from the service provider an indication of a billing amount, an indication of the identity of the subscriber, and an indication that the subscriber has authorized the billing of that amount, to pay for the service, and
circuitry for causing the billing amount to be billed to the subscriber, and a corresponding credit made to the service provider by the billing system.

29. Software stored on a computer readable medium for carrying out the method of claim 1.

30. A method of billing for a transaction between subscribers of a telecommunications network, the communications network including a network billing account associated with at least one of the subscribers, the method comprising the steps of:
receiving an agreement over the network for a billing amount for the transaction;
causing execution of the transaction with the at least one subscriber; and
causing a billing system associated with the network to obtain payment for the transaction through the network billing account of the at least one subscriber, the payment being determined in accordance with the billing amount.

31. The method according to claim 30, wherein the step of receiving agreement comprises the steps of receiving a request for execution of the transaction, providing notification of the billing amount, and obtaining over the network acceptance of the billing amount.

32. The method according to claim 31, wherein the notified billing amount comprises a negotiated billing amount, the negotiated billing amount being negotiated with the at least one subscriber.

33. The method according to claim 31, wherein the step of providing notification comprises the steps of transmitting a notification of the billing amount at intervals during the transaction, and receiving an acceptance in response to each said transmitted notification.

34. The method according to claim 33, wherein the step of causing payment comprises debiting the network billing account after each said acceptance.

35. The method according to claim 33, wherein the step of causing payment comprises debiting the network billing account after completion of the transaction.

36. The method according to claim 33, wherein the billing amount is determined dynamically throughout the transaction.

37. The method according to claim 30, wherein the executing step comprises causing execution of the transaction between a first and a second of the subscribers, and the step of receiving confirmation comprises the steps of receiving from the first subscriber notification of the billing amount, and receiving from the second subscriber notification of a confirmation amount corresponding to the billing amount.

38. The method according to claim 37, wherein the first subscriber notification and the second subscriber notification are received dynamically throughout the transaction.

39. The method according to claim 30, wherein the billing amount is determined in accordance with a class of the transaction.

40. The method according to claim 30, wherein the telecommunications network comprises a voice communications network.

41. A method of conducting a transaction between subscribers of a telecommunications network, the communications network including a network billing account associated with at least one of the subscribers, the method comprising the steps of:
confirming over the network an agreement to a billing amount for the transaction;
executing the transaction with the at least one subscriber; and
causing a billing system associated with the network to obtain payment for the transaction through the network billing account of the one subscriber, the payment being determined in accordance with the billing amount.

42. The method according to claim 41, wherein the confirming step comprises the steps of establishing a billing amount for the transaction, and receiving a notice of acceptance of the established billing amount.

43. The method according to claim 42, wherein the established billing amount comprises a negotiated billing amount, the negotiated billing amount being negotiated with the at least one subscriber.

44. The method according to claim 42, wherein the step of establishing a billing amount comprises providing a notification of the billing amount at intervals during the transaction, and the step of receiving notice comprises receiving an acceptance in response to each said provided notification.

45. The method according to claim 44, wherein the step of causing payment comprises debiting the one network billing account after each said acceptance.

46. The method according to claim 44, wherein the step of causing payment comprises debiting the one network billing account after completion of the transaction.

47. The method according to claim 42, wherein the step of establishing a billing amount comprises comprises dynamically establishing the billing amount throughout the transaction.

48. The method according to claim 41, wherein the billing amount is determined in accordance with a class of the transaction.

49. The method according to claim 41, wherein the telecommunications network comprises a voice communications network.
